(19) Europäisches Patentamt
European Patent Office
Office européen des brevets

(11) Veröffentlichungsnummer: **0 299 188 A2**

# (12) EUROPÄISCHE PATENTANMELDUNG

(21) Anmeldenummer: **88108731.6**

(51) Int. Cl.[4]: **C08G 61/02**

(22) Anmeldetag: **01.06.88**

(30) Priorität: **13.06.87 DE 3719851**

(43) Veröffentlichungstag der Anmeldung: **18.01.89 Patentblatt 89/03**

(84) Benannte Vertragsstaaten: **DE FR GB IT**

(71) Anmelder: **BAYER AG**
**Konzernverwaltung RP Patentabteilung**
**D-5090 Leverkusen 1 Bayerwerk(DE)**

(72) Erfinder: **Heitz, Walter, Prof.Dr.**
**Am Schmidtborn 5**
**D-3575 Kirchhain(DE)**
Erfinder: **Greiner, Andreas**
**Burgblick 1**
**D-3550 Marburg-Moischt(DE)**

## (54) Vinylencopolymerisate.

(57) Vinylencopolymerisate aus wiederkehrenden Struktureinheiten der Formel I

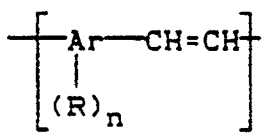

(I)

worin Ar einen aromatischen oder heterocyclischen Rest, R einen inerten Substituenten und n eine ganze Zahl von 0-8 bedeuten sowie Verfahren zu ihrer Herstellung.

EP 0 299 188 A2

## Vinylencopolymerisate

Gegenstand der Erfindung ist ein Verfahren zur Herstellung von Vinylencopolymerisaten, die die wiederkehrende Struktureinheit

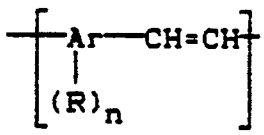 (I)

enthalten, in der Ar einen aromatischen oder heterocyclischen Rest und R Wasserstoff oder einen inerten Substituenten bedeutet, sowie n eine ganze Zahl von 0 bis 8. Der Polymerisationsgrad dieser Vinylencopolymerisate ist 3 bis 1000, bevorzugt 3 bis 100 und insbesondere 3 bis 20.

Ar ist vorzugsweise ein zweiwertiger Rest der sich von Benzol, Naphthalin, Phenanthren, Biphenyl oder von Resten der Formeln

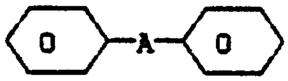 ; 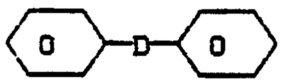 ; 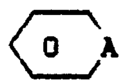 ;

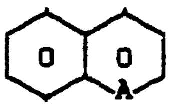 ; 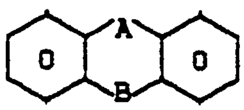 ; 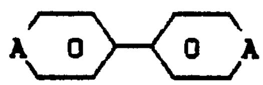 ;

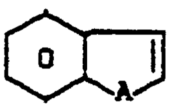 ; 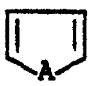

ableitet, worin A und B Sauerstoff, Stickstoff oder Schwefel und D die folgenden Gruppen

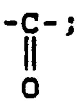 ; 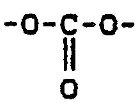 ; 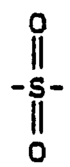 ; 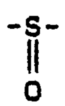 ; 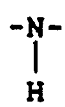 ; 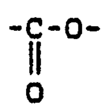 ; 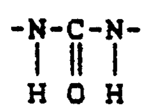 ;

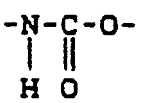 ; 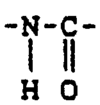 ; 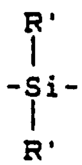 ; $-C_mH_{2m}$ (m = 2-22)

mit $R'$ = Alkyl bedeuten.

Bevorzugte Reste R sind -Cl; -F; $-C_mH_{2m+1}$; $-CMF_{2m+1}$; $-OR''$;

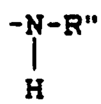

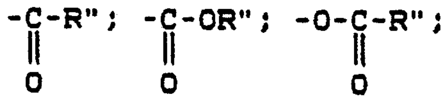 $-NO_2$; -OH;

$-NH_2$; $-CO_2H$; $-SO_3H$; $-SO_3R''$; -CN; -Phenyl
m = 1 bis 18
$R''$ = $C_mH_{2m+1}$; Phenyl; Alkylphenyl; Naphthyl; Pyrydyl und Biphenylrest.

Bevorzugte Vinylencopolymerisate der Erfindung sind solche mit wiederkehrenden Einheiten der Formel I in der
A für einen Phenylenrest und R für einen Fluoralkylrest mit 1-4 C-Atomen, bevorzugt für Trifluormethyl und n für 1 oder 2 steht und solche in denen
Ar einen aromatischen oder heterocyclischen Rest wie in Formel I definiert aber mit Ausschluß der Bedeutung Phenylen bedeutet und R und n die in Formel I angegebene Bedeutung haben.

Besonders bevorzugte Vinylencopolymerisate sind solche mit wiederkehrenden Struktureinheiten der folgenden Formeln

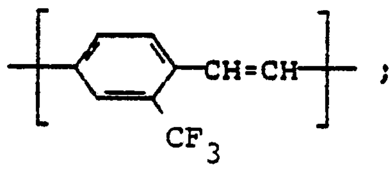 ; 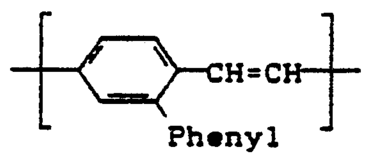 ;

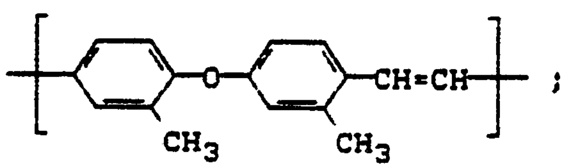 ;

Die Vinylencopolymerisate der Formel (I) können hergestellt werden durch Umsetzung von aromatischen Halogenverbindungen der Formel

$(R)_n$-Ar-$(Hal)_x$ (II)

mit Ethylen oder durch Umsetzung von Halogenvinylverbindungen der Formel

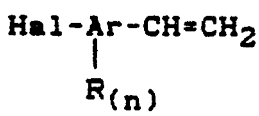 (III).

Dabei haben in Formeln (II) und (III) R, n und Ar die oben angegebene Bedeutung, x kann 2, 3, 4 oder eine höhere ganze Zahl bedeuten und Hal steht für Chlor, Brom oder Iod, bevorzugt Brom. Bevorzugt ist x = 2, für x >2 entstehen verzweigte Strukturelemente die durch die Formel (I) nicht erfaßt werden können.

Man verwendet bei der Umsetzung aromatischer Halogenverbindungen der Formel (II) mit Ethylen daher bevorzugt Dihalogenverbindungen gegebenenfalls im Gemisch mit kleineren Mengen an Tri- oder Tetrahalogenverbindungen je nach Menge der gewünschten Verzweigung oder Vernetzung.

Bevorzugte Verbindungen der Formel (II) sind:

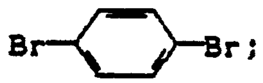
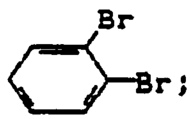
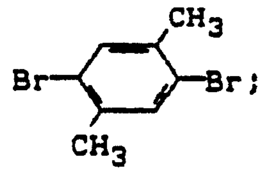

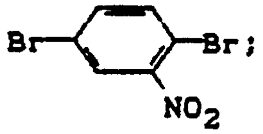
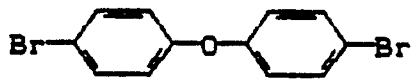

Bevorzugte Verbindungen der Formel (III) sind

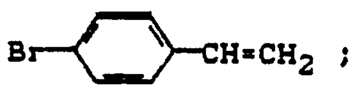
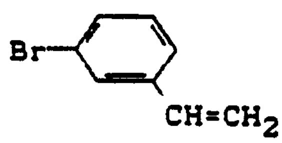

Die Umsetzung der Verbindungen (II) mit Ethylen oder der Verbindungen der Formel (III) wird i.a. in einem inerten polaren Lösungsmittel wie z.B. N,N-Dimethylformamid, N-Methylpyrrolidon oder Chloroform durchegführt. Sie erfordert Temperaturen von ca. 70 bis ca. 150° C und dauert z.B. 1 bis 72 Stunden.

Ferner ist ein Katalysator erforderlich, bevorzugt eine Kombination aus einer Palladiumverbindung (Palladium, Palladium-O-Komplex, Palladium-II-Salze wie Palladiumchlorid und Palladiumacetat, Palladium-Schwarz) und einem Triarylphosphin wie Tri-o-tolyl-phosphin oder einem sekundären Amin. Die Umsetzung erfordert die Anwesenheit einer Base im Überschuß z.B. eines tertiären Amins (Triethylamin, Tributylamin) oder eines basischen Salzes (z.B. Natriumacetat).

Wenn man die Umsetzung mit Ethylen durchführt, arbeitet man bevorzugt in einem Druckreaktor, in welchem man Halogenverbindung, Lösungsmittel und Katalysator vorlegt und gasförmiges Ethylen bis zu einem Druck von 0,1 bis 50 bar aufpreßt. Nach Beendigung der Reaktion kann das gebildete Polymerisat mit einem Fällmittel (Wasser, Alkohol) ausgefällt, abgetrennt, mit einem Lösungsmittel gewaschen und dann getrocknet werden (z.B. im Vakuum bei Temperaturen bis 250° C).

Wenn man die Umsetzung mit Verbindungen der Formel (III) durchführt, kann man ebenfalls unter Druck (z.B. unter einem Inertgas wie Argon) bevorzugt bis zu 10 bar arbeiten. Druckloses Arbeiten unter Inertgas ist ebenfalls möglich. Bevorzugt setzt man hier Verbindungen der Formel (I) und Verbindungen der Formel (III) in etwa äquivalenten Mengen ein. Im übrigen wendet man die gleichen Bedingungen an wie bei der Umsetzung mit Ethylen.

Die erfindungsgemäßen Polymerisate sind meist hell oder gelb gefärbte Feststoffe. Sie sind zum Teil schmelzbar; die Schmelzen sind meist orange gefärbt. Beim Abkühlen entstehen glasartige Produkte. Der Erweichungspunkt liegt über 100° C. Die Produkte sind geeignet zur Herstellung von Formkörpern einschließlich Folien und Fasern nach herkömmlichen Methoden.

Beispiele

Beispiel 1

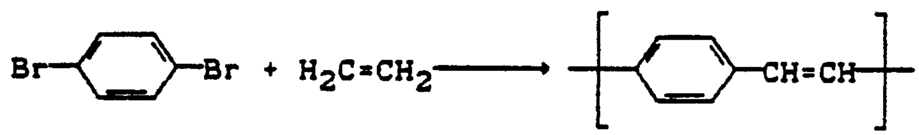

20 mmol 1,4-Dibrombenzol (4,718 g), 0,8 mmol Palladium (II) acetat (0,179 g), 4 mmol Tri(o-tolyl)-phosphin (1,216 g), 50 mmol Triethylamin (5,06 g) und 50 ml Dimethylformamid werden in einen 130 ml Stahlautoklaven eingefüllt, zweimal mit Stickstoff gespült und anschließend evakuiert (ca. 1 torr). Der Autoklav wird mit 21 mmol Ethylen (0,589 g) belüftet und für 24 Stunden auf 100 °C erhitzt.

Nach dem Abkühlen des Ansatzes wird der Inhalt des Autoklaven in 500 ml verdünnte Salzsäure gegeben, der Feststoff abfiltriert, mit 200 ml Wasser gewaschen, mit Methanol 24 Stunden extrahiert und bei 80 °C im Vakuum getrocknet.

Ausbeute: 1,38 g (68%), Schmp. größer als 350 °C.

Beispiel 2

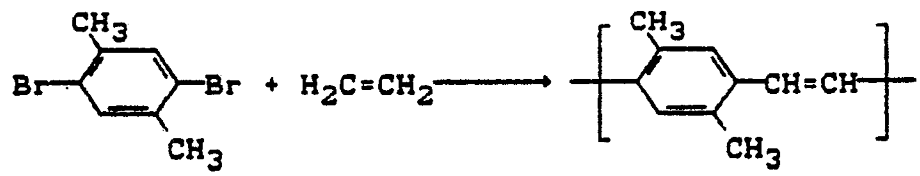

20 mmol 1,4-Dibrom-p-xylol (5,279 g), 0,8 mmol Palladium (II) acetat (0,179 g), 4 mmol Tri(o-tolyl)-phosphin (1,216 g), 50 mmol Triethylamin (5,06 g) und 50 ml Dimethylformamid werden in einen 130 ml Stahlautoklaven eingefüllt, zweimal mit Stickstoff gespült und anschließend evakuiert (ca. 1 torr). Der Autoklav wird mit 21 mmol Ethylen (0,589 g) belüftet und für 24 Stunden auf 100 °C erhitzt.

Nach dem Abkühlen des Ansatzes wird der Inhalt des Autoklaven in 500 ml verdünnte Salzsäure gegeben, der Feststoff abfiltriert, mit 200 ml Wasser gewaschen, mit Methanol 24 Stunden extrahiert und bei 80 °C im Vakuum getrocknet.

Ausbeute: 1,4 g (92%), Schmp. größer als 350 °C.

Beispiel 3

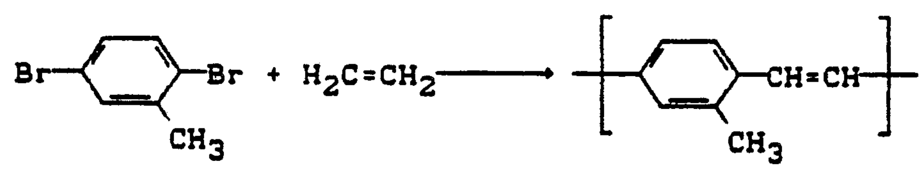

20 mmol 2,5-Dibromtoluol (4,998 g), 0,8 mmol Palladium (II) acetat (0,179 g), 4 mmol Tri(o-tolyl)-phosphin (1,216 g), 50 mmol Triethylamin (5,06 g) und 50 ml Dimethylformamid werden in einen 130 ml Stahlautoklaven eingefüllt, zweimal mit Stickstoff gespült und anschließend evakuiert (ca. 1 torr). Der Autoklav wird mit 21 mmol Ethylen (0,589 g) belüftet und für 24 Stunden auf 100 °C erhitzt.

Nach dem Abkühlen des Ansatzes wird der Inhalt des Autoklaven in 500 ml verdünnte Salzsäure gegeben, der Feststoff abfiltriert, mit 200 ml Wasser gewaschen, mit Methanol 24 Stunden extrahiert und bei 80 °C im Vakuum getrocknet.

Ausbeute: 2,2 g (95%), Erweichung ab 250 °C.

Infrarotspektrum (in $cm^{-1}$): 3020; 1505; 1450; 965; 892; 830.

Beispiel 4

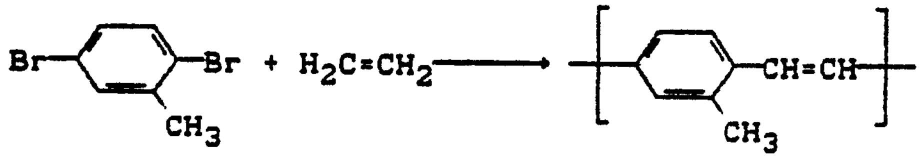

20 mmol 2,5-Dibrombenzotrifluorid (6,079 g), 0,8 mmol Palladium (II) acetat (0,179 g), 4 mmol Tri(o-tolyl)-phosphin (1,216 g), 50 mmol Triethylamin (5,06 g) und 50 ml Dimethylformamid werden in einen 130 ml Stahlautoklaven eingefüllt, zweimal mit Stickstoff gespült und anschließend evakuiert (ca. 1 torr). Der Autoklav wird mit 21 mmol Ethylen (0,589 g) belüftet und für 24 Stunden auf 100 °C erhitzt.

Nach dem Abkühlen des Ansatzes wird der Inhalt des Autoklaven in 500 ml verdünnte Salzsäure gegeben, der Feststoff abfiltriert, mit 200 ml Wasser gewaschen, mit Methanol 24 Stunden extrahiert und bei 80 °C im Vakuum getrocknet.

Ausbeute: 3,0 g (95%), Erweichung ab 300 °C.

Infrarotspektrum (in $cm^{-1}$): 3020; 1500; 1320; 1130; 1060; 960; 900; 840.

Beispiel 5

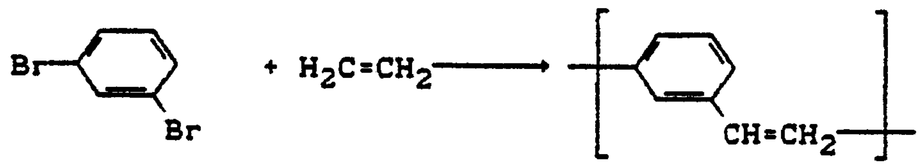

20 mmol 2,5-Dibrombenzol (4,718 g), 0,8 mmol Palladium (II) acetat (0,179 g), 4 mmol Tri(o-tolyl)-phosphin (1,216 g), 50 mmol Triethylamin (5,06 g) und 50 ml Dimethylformamid werden in einen 130 ml Stahlautoklaven eingefüllt, zweimal mit Stickstoff gespült und anschließend evakuiert (ca. 1 torr). Der Autoklav wird mit 21 mmol Ethylen (0,589 g) belüftet und für 24 Stunden auf 100 °C erhitzt.

Nach dem Abkühlen des Ansatzes wird der Inhalt des Autoklaven in 500 ml verdünnte Salzsäure gegeben, der Feststoff abfiltriert, mit 200 ml Wasser gewaschen, mit Methanol 24 Stunden extrahiert und bei 80 °C im Vakuum getrocknet.

Ausbeute: 1,9 g (93%)

Infrarotspektrum (in $cm^{-1}$): 3023; 1595; 963; 695.

Beispiel 6

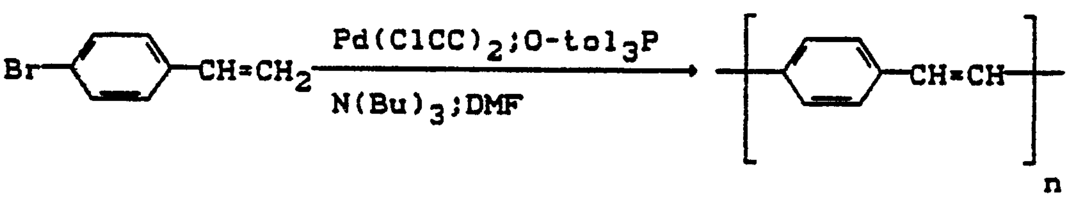


3,6 g p-Bromstyrol (20 mmol), 0,112 g Palladium (II)-acetat (0,5 mmol), 0,46 g Tri(o-tolyl)-phosphin (1,5 mmol), 7,8 g Tributylamin (42 mmol), und 100 ml Dimethylformamid wurden in einem 250 ml Dreihalskolben mit aufgesetztem Rückflußkühler unter Stickstoffatmosphäre für 64 Stunden auf 140 °C erhitzt.

Nach dem Abkühlen des Ansatzes wurde der Inhalt des Kolbens in 200 ml verdünnte Salzsäure gegeben, der Feststoff abfiltriert, mit 10%iger Salzsäure und Wasser gewaschen, mit Ethanol und Toluol

extrahiert und im Vakuum getrocknet.

Ausbeute 1,5 g (73%), Schmp. größer als 350 ° C.

Bromgehalt 4,72%.

## Ansprüche

1. Verfahren zur Herstellung von Vinylencopolymerisaten die wiederkehrende Struktureinheiten der Formel (I)

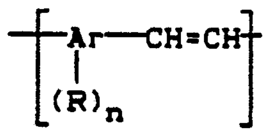

(I)

enthalten, in der Ar einen aromatischen oder heterocyclischen Rest, R Wasserstoff oder einen inerten Substituenten und n eine ganze Zahl von 0 bis 8 bedeuten, dadurch gekennzeichnet, daß man aromatische Halogenverbindungen der Formel (II)

$(R)_b$-Ar-$(Hal)_x$ (II)

und Ethylen oder Halgenverbindungen der Formel (III)

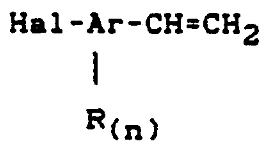

(III)

worin Ar einen aromatischen oder heterocyclischen Rest, R Wasserstoff oder einen inerten Substituenten, Hal Halogen, n 0, 1, 2 oder 3 und x 2, 3, 4 oder eine höhere ganze Zahl bedeuten, in einem inerten polaren Lösungsmittel bei 70 bis 150 ° C in Anwesenheit eines Katalysators umsetzt.

2. Vinylencopolymerisate aus wiederkehrenden Struktureinheiten der Formel (I) des Anspruchs 1 worin Ar für einen Phenylenrest und R für einen Fluoralkylrest mit 1-4 Kohlenstoffatomen und n für 1 oder 2 steht.

3. Vinylencopolymerisate aus wiederkehrenden Struktureinheiten der Formel (I) des Anspruchs 1 worin Ar einen aromatischen oder heterocyclischen Rest wie in Formel (I) definiert aber mit Ausschluß des Phenylenrests bedeutet, und R und n die in Formel (I) angegebene Bedeutung haben.